# EUROPEAN PATENT SPECIFICATION

(11) **EP 3 454 192 B1**
(45) Date of publication and mention of the grant of the patent: **12.04.2023**
(21) Application number: 18193149.4
(22) Date of filing: 07.09.2018
(51) Int. Cl.: G06F 3/04817, G06F 3/0482, G06F 3/0483

(54) **METHOD AND DEVICE FOR DISPLAYING PAGE**
VERFAHREN UND VORRICHTUNG ZUR ANZEIGE EINER SEITE
DISPOSITIF ET PROCÉDÉ D'AFFICHAGE DE PAGES

(30) Priority: 07.09.2017 CN 201710801956
(43) Date of publication of application: 13.03.2019
(73) Proprietor: Beijing Xiaomi Mobile Software Co., Ltd., Beijing 100085 (CN)
(72) Inventor: LI, Lan, Beijing, Beijing 100085 (CN); LI, Jiayan, Beijing, Beijing 100085 (CN); LU, Zhenzhou, Beijing, Beijing 100085 (CN)
(74) Representative: dompatent von Kreisler Selting Werner - Partnerschaft von Patent- und Rechtsanwälten mbB

(56) References cited:
- US-A1- 2014 074 909
- US-A1- 2016 050 165

## Description

### TECHNICAL FIELD

The present disclosure generally relates to the field of computers, and more particularly, to a method and a device for displaying a page.

### BACKGROUND

With the development of instant communication technology, there are more and more types of chat applications for real-time communication. At the same time, due to popularity of mobile terminals, it is more and more common for users to use chat applications through mobile terminals in their daily lives.

In the related art, since most users have more than one contact, and in some usage scenarios, the user needs to chat with multiple friends at the same time. For example, a user chats with a contact A and a contact B simultaneously using a chat-type application. In order to chat with the contact A, the user needs to first click on the avatar of the contact A in the contact list to enter the conversation page with the contact A. When the user needs to switch from the conversation page with the contact A to the conversation page with the contact B, the user will have to click a return button in the navigation bar or a return button provided by the chat application. Subsequently, the user will have to find another contact B to chat with in the contact list, and click the avatar of the contact B to enter the conversation page of the chat with the contact B. If the user subsequently needs to open the conversation page with the contact A again, the user also will have to first return to the contact list, and then click on the avatar of the contact A to display the conversation page with the contact A.

Document US 2016/050165 A1 discloses a navigation model that implements a messaging conversation history in a minimized form so that a user can quickly jump to a desired conversation without having to toggle back and forth between a conventional messaging list view and chat card views. The minimized conversation history can be implemented using a scrollable carousel of images that is persistently displayed on the UI.

This section provides background information related to the present disclosure which is not necessarily prior art.

### SUMMARY

Embodiments of the present disclosure provide a method and a device for displaying a page.

The technical solutions provided by the embodiments of the present disclosure may include the following advantageous effects.

A navigation bar and a user interface of the target application are displayed; when an application page is displayed in the user interface, at least one target conversation page of the target application is determined; a first page display control of the at least one target conversation page is displayed in the navigation bar; and when a first designated operation performed on the first page display control is detected, the application page displayed in the user interface is switched to display a target conversation page corresponding to the first page display control. Since the user interface and the navigation bar of the target application are displayed side by side, and when an application page is displayed in the user interface, the first page display control of the at least one target conversation page will be displayed in the navigation bar, and, when the first page display control is triggered, the user interface may display the at least one target conversation page, so that the user can use the at least one target conversation page perform instant communication with a contact. It can be seen that the embodiment of the present disclosure can enable the user to directly switch from the application page to the target conversation page, save multi-step operations for the user to switch to the target conversation page, and improve the switching efficiency of the target conversation page.

It is to be understood that both the foregoing general description and the following detailed description are exemplary only and are not restrictive of the present disclosure.

This section provides a summary of various implementations or examples of the technology described in the disclosure, and is not a comprehensive disclosure of the full scope or all features of the disclosed technology.

### BRIEF DESCRIPTION OF THE DRAWINGS

The accompanying drawings, which are incorporated in and constitute a part of this specification, illustrate embodiments consistent with the present disclosure and, together with the description, serve to explain the embodiments of the present disclosure.
Fig. 1 is a flow chart illustrating a method for displaying a page according to an embodiment of the present disclosure;
Fig. 2 is a flow chart illustrating another method for displaying a page according to an embodiment of the present disclosure;
Fig. 3A is a schematic diagram illustrating a displayed page according to the embodiment shown in Fig. 2;
Fig. 3B is a schematic diagram illustrating another displayed page according to the embodiment shown in Fig. 2;
Fig. 4 is a block diagram illustrating a device for displaying a page according to an embodiment of the present disclosure;
Fig. 5 is a block diagram illustrating another device for displaying a page according to an embodiment of the present disclosure; and
Fig. 6 is a block diagram illustrating a terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devicees and methods consistent with aspects related to the present disclosure.

References herein to "modules" refer to programs or instructions stored in memory that are capable of performing certain functions. "Multiple" as used herein refers to two or more. "And/or" describes the association relationship of the related objects, and indicates that there may be three relationships. For example, A and/or B may indicate only A, both A and B, and only B. The sign "/" generally indicates that the related objects before and after the sign has an "or" relationship with each other.

With the rapid development of instant communication technology and integrated electronic technology, instant communication technology has been gradually evolved from initially being mainly applied to fixed terminals such as PCs to being applied to mobile terminals such as mobile phones. With the widespread usage of mobile terminals, users can perform instant communication with other contacts through the mobile terminals anytime and anywhere.

However, since the user needs to use the mobile phone to simultaneously chat with more than two contacts in some communication scenarios, the user needs to switch between two or more conversation pages. For example, when the user needs to switch from the conversation page with the contact A to the conversation page with the contact B, the mobile terminal needs to first exit the current conversation page with the contact A, and then enter the page containing the contact list. Then, when the user clicks on the avatar of the contact B in the contact list, the screen displays a conversation page with the contact B. As the chats of the user proceed, the user has to control the mobile terminal to perform switching for many times.

Therefore, in order to save switching operation between two or more conversation pages for the user, the embodiment of the present disclosure provides a method for displaying a conversation page. That is, when the conversation page where the user chats with the current contact A is displayed in the user interface of the target application, the operating system of the mobile terminal may display a first page display control of other conversation pages in the navigation bar displayed side by side. When the user clicks on the first page display control, the conversation page corresponding to the first page display control may be directly displayed. It can reduce the number of operation steps for the user to switch from one conversation page to another conversation page, and can improve the efficiency of switching to the conversation page.

In specific implementation, the method for displaying a page provided in the embodiment of the present disclosure may be applied to a mobile terminal. An operating system runs in the mobile terminal. The operating system runs a target application. The target application provides a conversation page. The conversation page is a conversation page that is not currently displayed in the user interface.

Optionally, the mobile terminal may include a mobile phone, a tablet, an e-book reader, an MP3 (Moving Picture Experts Group Audio Layer III) player, or an MP4 (Moving Picture Experts Group Audio Layer IV) player and the like. It should be noted that the user in this disclosure refers to the user of the mobile terminal.

Optionally, the target application runs in the operating system. The operating system may be an open platform. For example, the operating system may be an operating system based on the Linux kernel. The operating system may include, but is not limited to, an Android system and a custom system developed based on an Android system. The customized system may be an operating system of a mobile terminal with new functions by modifying, deleting or adding some system functions based on the Android system.

Optionally, the target application provides a conversation page for chatting with the contact. The type of the target application may be preset by the operating system, and there may be at least one type. The target application may be an application allowing chatting with a contact, such as a social application, a game application, a shopping application, or a wealth management application. Among them, the social application may further include a blog type application and a chat type application. For case of understanding, the embodiment of the present disclosure introduces the target application taking a chat type application as an example.

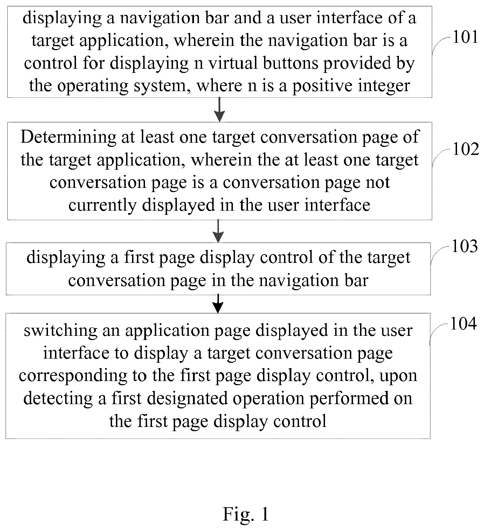

Taking the above-mentioned hardware device installed with the operating system as a mobile terminal for an example, a method for displaying a page provided by the embodiment of the present disclosure will be described. Referring to Fig. 1, an embodiment of the present disclosure provides a method for displaying a page. Before the method is implemented, a target application needs to be installed in the mobile terminal. For example, the mobile terminal installs a target application that conforms to the version of the operating system in the mobile terminal. As shown in Fig. 1, the method includes the following steps.

In step 101, a navigation bar and a user interface of the target application are displayed. The navigation bar is a control for displaying n virtual buttons provided by the operating system, where n is a positive integer.

In the embodiment of the present disclosure, the navigation bar is a bar-shaped area provided by the operating system. In the area, a virtual button provided by the operating system is displayed. When different virtual buttons are triggered, different system functions can be implemented. For example, the virtual button includes a return button, a home button, and a menu button, of which the return button is configured to implement a system function returning to a higher level, the home button is configured to implement a function of switching to the home page, and the menu button is configured to implement a function of expanding the menu of the currently running application.

In the present disclosure, the number of virtual buttons displayed in the navigation bar is a positive integer. In addition, due to the limited size of the terminal screen, the number of virtual buttons that can be simultaneously presented in the screen has an upper limit value for a terminal. For example, a navigation bar of a terminal displays a control of n virtual buttons, where n is a positive integer and a minimum value of n is 1. Since length of the bottom edge of the terminal is limited, the upper limit of n can be set to 5.

Optionally, the maximum width of the navigation bar is limited by the screen width, and the height of the navigation bar can be adjusted within a certain range, so that a control of at least two rows of virtual buttons can be displayed in the navigation bar. The embodiment docs not limit the specific display style of the navigation bar.

In the embodiment of the present disclosure, the operating system displays the navigation bar and the user interface of the application side by side so that the user can see the content presented in the navigation bar while seeing the complete user interface. Alternatively, the operating system may also place the navigation bar on the upper layer at the bottom of the user interface for presenting. When the navigation bar is displayed on the upper layer at the bottom of the user interface, the navigation bar may be displayed semi-transparently.

In step 102, at least one target conversation page of the target application is determined, wherein the at least one target conversation page is a conversation page not currently displayed in the user interface.

For this step, after installing a target application that conforms to the version of the operating system on the mobile terminal, the target application may run based on the operating system. The target application will present the user interface on the screen of the mobile terminal at runtime. The operating system determines at least one target conversation page of the target application when the target application is running in the foreground. The at least one target conversation page is a conversation page that is not displayed in the user interface.

Optionally, the operating system may determine at least one target conversation page when the user interface is an application page in the target application. For example, the application page by set in advance by the operating system is a conversation page. When a conversation page is displayed in the user interface presented in the screen, the operating system may determine at least one target conversation page.

The application page is at least one of a conversation page, a content presentation page, or a data submission page. Different pages may have different functions. For example, the conversation page is for instant communication with a contact corresponding to the contact information. The conversation page may include a chat window or the page per se is implemented as a chat window. The content presentation page is for presenting at least one of a text, a picture, an audio clip or a video clip. The data submission page is for sending data to the target application or a server of the target application, and the data is for modifying the setup information of the target application.

In step 103, a first page display control of the target conversation page is displayed in the navigation bar.

In the embodiment of the present disclosure, the operating system displays the above first page display control in the navigation bar. While displaying the first page display control, an application page is displayed in the user interface displayed side by side with the navigation bar. Each first page display control corresponds to one target conversation page, and each target conversation page is used for instant communication with a corresponding contact. Optionally, the first page display control may display information such as the avatar, the nickname or the comment name of the corresponding contact.

Optionally, when there are at least two first page display controls, the display may be performed in the order of most recent communication time.

Optionally, when the navigation bar cannot display all the first page display controls at the same time, the operating system hides some of the first page display controls and displays the first page display controls that have been hidden when a designated operation is received. For example, the operating system hides some of the page display controls on the left or right sides of the screen. In this case, the operating system may display a corresponding hidden page display control when the navigation bar is swiped to the left or swiped to the right by the user.

In step 104, when a first designated operation performed on the first page display control is detected, the application page displayed in the user interface is switched to display a target conversation page corresponding to the first page display control.

The terminal may accept the first designated operation on the display control. The first designated operation may be a click operation (a short press), a long press operation, a leftward slide, a rightward slide, an upward slide or a downward slide, and the like.

Optionally, for a terminal capable of distinguishing the sizes of the pressing pressures, the first designated operation may also be an operation of lightly pressing and of a heavy pressing, or the like.

Accordingly, in the method for displaying a page provided by the embodiment of the present disclosure, a navigation bar and a user interface of the target application are displayed; when an application page is displayed in the user interface, at least one target conversation page of the target application is determined; a first page display control of the target conversation page is displayed in the navigation bar; and when a first designated operation performed on the first page display control is detected, the application page displayed in the user interface is switched to display a target conversation page corresponding to the first page display control. Since the user interface and the navigation bar of the target application are displayed side by side, and when an application page is displayed in the user interface, the first page display control of the target conversation page will be displayed in the navigation bar, when the first page display control is triggered, the user interface may display the target conversation page, so that the user can use the target conversation page perform instant communication with a contact. It can be seen that the embodiment of the present disclosure can enable the user to directly switch from the application page to the target conversation page, save multi-step operations for the user to switch to the target conversation page, and improve the switching efficiency of the target conversation page.

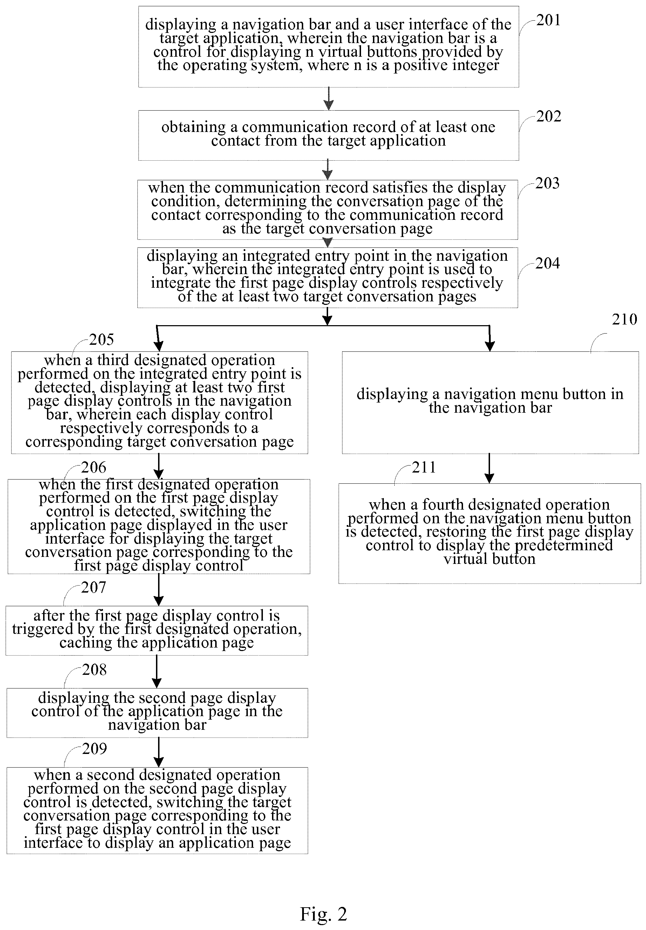

Based on the method for displaying a page provided in Fig. 1 according to an embodiment of the present disclosure, in order to allow the mobile terminal to conveniently be switched back to the application page, after the mobile terminal is caused to present the instant communication page by triggering of the page display control, another method for displaying a page is provided according to an embodiment of the present disclosure, as shown in Fig. 2. The method may be applied to the above mobile terminal. As shown in Fig. 2, the method includes the following steps.

In step 201, a navigation bar and a user interface of the target application arc displayed. The navigation bar is a control for displaying n virtual buttons provided by an operating system, where n is a positive integer.

The process of step 201 is the same as that of step 101. For details, the specific process of step 101 may be referred to, and step 101 will not be repeated herein.

In step 202, a communication record of at least one contact is obtained from the target application.

In the embodiment of the present disclosure, the operating system may obtain the communication record of the at least one contact from the target application when the target application is running in the foreground.

Optionally, the operating system may monitor the condition of the page and the control in the user interface displayed on the screen of the terminal, such as the type of page displayed in the user interface, the content contained in the page, and the state of the displayed control. When the operating system detects that an application page is displayed in the user interface, the operating system will obtain the communication record of at least one contact from the target application.

Optionally, the contact may be a part of the contacts preset by the target application or all of the contacts. For example, the target application contains 100 contacts, and correspondingly, has communication records of the 100 contacts. In this step, the operating system may obtain the communication records of the 100 contacts, or communication records of part of the contacts meeting a designated requirement. In an optional implementation, the target application may determine whether to provide a communication record of a contact to the operating system based on information such as contact group information or a contact tag. For example, the target application determines the contact information of a "particularly concerned" group or with a "family" tag as the contact information to be provided to the operating system. Optionally, in a possible implementable, the contact may also be a chat group or a merchant public number.

Optionally, in order to obtain the communication record of the contact from the target application, the operating system may previously invoke an API (Application Programming Interface) provided by the target application. When the operating system obtains the access authority of the API, the operating system may read the communication record of the contact from the API.

For example, after the operating system acquires the API of the target application, the operating system may obtain communication records of three contacts of a contact m1, a contact m2, and a contact m3. Then, the operating system acquires the sending time and the receiving time of each communication message of each of the above-mentioned contacts. Since in the instant communication, the speed for transmitting information is close to the speed of light, the sending time and the receiving time of the communication message can be regarded as the same in the actual application. Such time may be collectively referred to as transceiving time. In addition, each communication message may include an unread flag in addition to the transceiving time. When one communication message has not been presented in the user interface by the target application in the terminal, the communication message contains an unread flag, for indicating that the communication message has not been read by the user. After the operating system obtains the transceiving time of each communication message in the communication record the operating system may also count the total number of communication messages for each contact, or the total number of communication messages in a designated time period.

In step 203, when the communication record satisfies the display condition, the conversation page of the contact corresponding to the communication record is determined as the target conversation page.

In the embodiment of the present disclosure, the display condition is used to filter the communication records so as to determine the conversation page corresponding to the communication record that meets the display condition as the target conversation page.

The display condition includes at least one of the following conditions: (1) the total number of communication messages is greater than a first number threshold, where the first number threshold is an integer not less than 0; (2) the total number of communication messages within a designated time period is greater than a second number threshold, where the second number threshold is an integer not less than 0; and (3) a second communication message is included, wherein the second communication message is a communication message that has not been presented by the target application.

Optionally, when the display condition only includes the above display condition (1), the operating system directly counts the number of communication messages for each contact. A first number threshold, for example 100, may be preset by the operating system. When the number of communication messages of one contact exceeds the first number threshold, the operating system determines the conversation page corresponding to the communication messages as the target conversation page. Optionally, the operating system may also set a threshold number T for the target conversation pages, instead of setting the first number threshold, where T is an integer not less than 1. Then, the operating system determines conversation pages corresponding T contacts with the largest number of communication messages, as target conversation pages. For example, if T is 2, then the operating system takes the conversation pages respectively corresponding to the two contacts with the largest number of communication messages, as target conversation pages.

Optionally, when the display condition only includes the above display condition (2), the operating system first determines whether each communication message in the communication record is within a designated time period, and then determines the target conversation page according to the number of messages within the designated time period. For example, the operating system determines the designated time period as3 days before the current system time, and the operating system separately counts the number of messages for each contact in the communication record within 3 days before the current system time. At this time, the operating system may determine the conversation page of the contact with the number of the messages more than the second threshold as the target conversation page, or may determine the conversation pages of S contacts with the largest number of communication messages as the target conversation pages.

It should be noted that the operating system may determine the contact corresponding to the communication message with the shortest time difference between the transceiving time and the current system time as a most recent contact, and determine the conversation page corresponding to the most recent contact as the target conversation page.

Optionally, when the display condition only includes the above display condition (3), the operating system will determine whether there is a second communication message in the communication record that has not been presented by the target application. For example, when there arc 5 contacts in the communication message obtained by the operating system, all the communication messages of the 4 contacts of the 5 contacts have been presented by the target application, and the communication record of the remaining 1 contact of the 5 contacts contains a communication message that has not been presented by the target application, there is deemed to be a second communication message in the communication record of the contact, and the operating system determines the corresponding conversation page of the contact as the target conversation page.

Optionally, the above-described display conditions (1), (2) and (3) may be combined with each other as a new display condition, such as a combination of display condition (1) and display condition (2); or, a combination of display condition (1) and display condition (3); or, a combination of display condition (2) and display condition (3); or, a combination of display condition (1), display condition (2) and display condition (3), which is not limited by the present disclosure.

After the operating system completes step 203, at least one target conversation page will be determined. It should be noted that each target conversation page corresponds to one contact, for instant communication with the corresponding contact.

In step 204, an integrated entry point is displayed in the navigation bar, the integrated entry point is used to integrate the first page display controls respectively of the at least two target conversation pages.

In an embodiment of the present disclosure, the operating system determines that there are at least two target conversation pages. Correspondingly, when the target conversation page is at least two, in order to save the display space in the navigation bar, the operating system will display an integrated entry point for storing the first page display controls. When the integrated entry point is triggered, at least two first page display controls are displayed in the navigation bar.

Optionally, the operating system may further add a display integrated entry point in an area outside the n virtual buttons in the navigation bar, the n virtual buttons include at least one of a return button, a home button, and a menu button.

Optionally, when the integrated entry point is displayed in an area outside the n virtual buttons in the navigation bar, with reference to the n virtual buttons, the integrated entry point may be displayed on the left side area or the right side area of the n virtual buttons. Alternatively, the integrated entry point can also be displayed in an area of one of the n virtual buttons.

It should be noted that the integrated entry point may be configured to house and integrate the first page display controls, and the integrated entry point may be displayed as a visual icon in the navigation bar.

Optionally, when the first page display control is a single control, the operating system may not display the above-mentioned integrated entry point, but directly display the first page display control at the above-mentioned integrated entry point. Alternatively, when the first page display control described above is a single control, the operating system may also display the above integrated entry point.

In step 205, when a third designated operation performed on the integrated entry point is detected, at least two first page display controls are displayed in the navigation bar, and each display control respectively corresponds to a corresponding target conversation page.

In an embodiment of the present disclosure, when the operating system detects a third designated operation performed on the integrated entry point, at least two first page display controls will be displayed in the navigation bar, and each display control respectively corresponds to a corresponding target conversation page. The operating system may detect the third designated operation by the user on the integrated entry point. The third designated operation may also be a short press, a long press, a leftward slide, a rightward slide, an upward slide or a downward slide. Optionally, for a terminal capable of distinguishing the sizes of the pressing pressures, the third designated operation may also be an operation of lightly pressing and of a heavy pressing, or the like.

Optionally, the operating system may also replace a predetermined virtual button among the n virtual buttons to display the first page display control according to the third designated operation. For example, initially, three virtual buttons are displayed in the navigation bar: a return button, a home button, and a menu button, and the operating system may replace the above three virtual button displays with at least two first page display controls.

In an embodiment of the present disclosure, in order to enable display of the first page display control in a limited display space in the navigation bar, some of the first page display controls may be displayed in the navigation bar. For example, when the display control includes M first page display controls, N third page display controls and (M-N) fourth page display controls among the M first page display controls are determined, where N is a preset positive integer, and M is an integer greater than N. The operating system will display the above-mentioned N third page display controls in the navigation bar. At this time, the (M-N) fourth page display controls are not displayed in the navigation bar.

Subsequently, when the operating system detects a fourth designated operation performed on the navigation bar, Z third page display controls in the N third page display controls are replaced for displaying Z fourth page display controls of the (M-N) fourth page display controls, where Z is a positive integer, and Z is not greater than the smaller of N and (M-N). The operating system may detect the fourth designated operation by the user on the navigation bar. The fourth designated operation may also be a short press, a long press, a leftward slide, a rightward slide, an upward slide or a downward slide. Optionally, for a terminal capable of distinguishing the sizes of the pressing pressures, the fourth designated operation may also be an operation of lightly pressing and of a heavy pressing, or the like.

For example, when three third page display controls are currently displayed in the navigation bar, three fourth page display controls are hidden on the right side of the navigation bar. When the operating system detects that the user performs a leftward slide on the navigation bar, the operating system will determine how many fourth page display controls arc additionally displayed to replace the third page display controls according to the distance of the leftward slide. For example, if the distance of the leftward slide operation is a width occupied by a display control, one fourth page display control is additionally displayed in the navigation bar, to replace one third page display control.

In step 206, when the first designated operation performed on the first page display control is detected, the application page displayed in the user interface is switched for displaying the target conversation page corresponding to the first page display control.

The process of step 206 is the same as that of step 104. Details may refer to the process of step 104, which will not be repeated herein.

In step 207, after the first page display control is triggered by the first designated operation, the application page is cached.

In an embodiment of the present disclosure, the operating system caches the application page after the first page display control is triggered by the first designated operation. It should be noted that the application page is a page displayed in the user interface before the first designated operation triggers the first page display control. For example, when the target application is a social application, the application page is a blog presentation page sent by a friend. At this time, if the user clicks on the first page display control in the navigation bar, the operating system caches the blog presentation page current presented on the user interface.

Optionally, the application page may be temporarily cached in memory or stored in external storage.

In step 208, the second page display control of the application page is displayed in the navigation bar.

After the operating system caches the application page, the second page display control of the application page is displayed in the navigation bar, and the second page display control is associated with the application page.

In step 209, when a second designated operation performed on the second page display control is detected, the target conversation page corresponding to the first page display control in the user interface is switched to display an application page.

The operating system may detect the second designated operation by the user on the second page display control, and the second designated operation may also be a short press, a long press, a leftward slide, a rightward slide, an upward slide or a downward slide.

Optionally, for a terminal capable of distinguishing the sizes of the pressing pressures, the second designated operation may also be an operation of lightly pressing and of a heavy pressing, or the like.

In step 210, a navigation menu button is displayed in the navigation bar.

In an embodiment of the present disclosure, when n virtual buttons are replaced with display controls in the navigation bar, the operating system may display a navigation menu button in the navigation bar. The navigation menu button is for expanding the predetermined virtual button provided by the operating system again for displaying them.

Optionally, for ease of operation, the navigation menu button may be designed at least one of the leftmost and rightmost sides of the navigation bar. The navigation menu button may appear only on the leftmost side of the navigation bar, or may appear only on the right side of the navigation bar, or may appear on the leftmost and rightmost sides of the navigation bar at the same time. Optionally, the navigation menu buttons that appear at the same time may be displayed in different icon styles or may be displayed in the same icon style.

In step 211, when a fourth designated operation performed on the navigation menu button is detected, the first page display control is restored to display the predetermined virtual button.

The operating system may detect the fourth designated operation by the user on the navigation menu button, and the fourth designated operation may be a short press, a long press, a leftward slide, a rightward slide, an upward slide or a downward slide.

Optionally, for the terminal capable of distinguishing the sizes of the pressing pressures, the fourth designated operation may also be an operation of lightly pressing and of a heavy pressing, or the like.

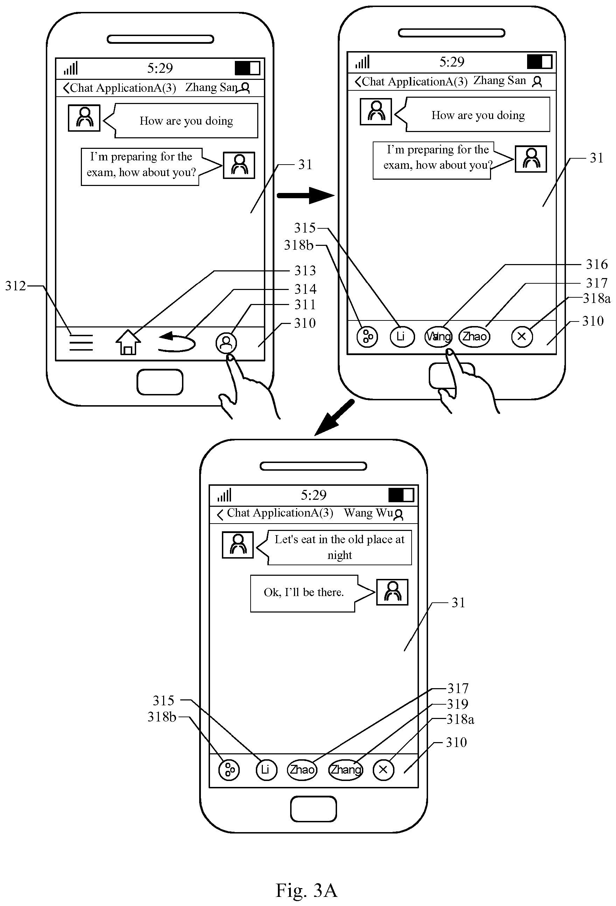

For example, in an embodiment of the present disclosure, assuming that the terminal is a mobile phone, the operating system is a customized system M based on an Android system, and the target application is a chat application A, an application scenario of the embodiment of the present disclosure will be described. As shown in Fig. 3A, Fig. 3A is a schematic diagram illustrating a displayed page according to the embodiment shown in Fig. 2. In Fig. 3A, a user interface 31 displayed on the screen displays a chat page with a contact Zhang San provided by the chat application A. The customized system M determines the type of the chat page of the chat application A as a preset page. At this time, since the customized system M detects that the page presented in the interface 31 is the same as the type of the preset page. Thus, the customized system M will present an integrated entry point 311 in the system operation bar 310. In addition, a menu button 312, a home button 313, and a return button 314 are also displayed in the navigation bar 310. When the integrated entry point 311 is triggered by a click from the user, the system operation bar 310 will present a page display control 315 of a frequent contact Li Si, a page display control 316 of a most recent contact Wang Wu and a page display control 317 of a new-message contact Zhao Liu. In addition, a navigation menu button 318a and a navigation menu button 318b will also be displayed in the navigation bar 310. The navigation menu button 318a is located on the left side of the navigation bar and is convenient to operate from the left side. The navigation menu button 318b is located on the right side of the navigation bar, which facilitates the user to operate from the right side. The user may from the chat page with Zhang San, enter a corresponding chat page by clicking the first page display control. For example, when the user clicks on the page display control 316, the chat page with Zhang San in the user interface 31 may gradually become transparent until it disappears, and then the chat page with Wang Wu is displayed in the user interface 31. At the same time, the second page display control 319 of the chat page with Zhang San will be presented in the system operation bar. Since the page display control 319 is entry point to the most recent contact, the page display control 319 may be arranged before (i.e. closer to the right side of the interface 31) the page display control 315 and the page display control 317. After the page display control 315 is clicked again, the customized system will display the chat page 31a with Zhang San again.

In addition, in order to facilitate the user to return to the main interface of the navigation bar 310, when the navigation menu button 318a or the navigation menu button 318b is triggered, the customized system M will display the integrated entry point 311, the menu button 312, the home button 313, and the return button 314 again.

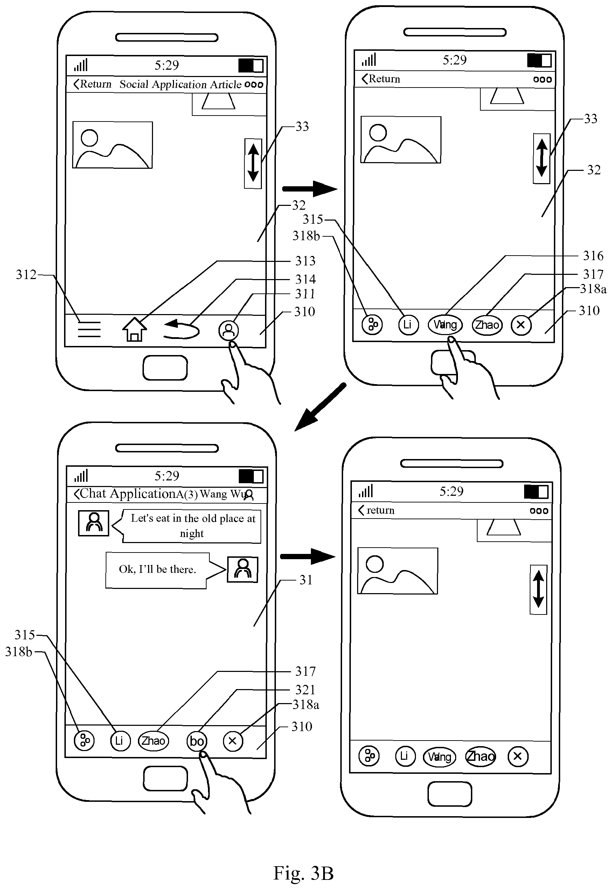

For another example, in an embodiment of the present disclosure, assuming that the terminal is a mobile phone, the operating system is a customized system M based on an Android system, and the target application is a chat application A, another application scenario of the embodiment of the present disclosure will be described. As shown in Fig. 3B, Fig. 3B is a schematic diagram illustrating another displayed page according to the embodiment shown in Fig. 2. In Fig. 3B, a user interface 32 on the screen displays a blog presentation page of the chat application A. The customized system M determines the type of the blog presentation page of the chat application A as a preset page. Since the customized system M detects that the page presented in the user interface 32 is the same as the type of the preset page. Thus, the customized system M will present an integrated entry point 311 in the system operation bar 310. When the integrated entry point 311 is triggered by a click from the user, the system operation bar 310 will present a page display control 315 of a frequent contact Li Si, a page display control 316 of a most recent contact Wang Wu and a page display control 317 of a new-message contact Zhao Liu. In addition, a navigation menu button 318a and a navigation menu button 318b will also be displayed in the navigation bar 310. The navigation menu button 318a is located on the left side of the navigation bar and is convenient to operate from the left side. The navigation menu button 318b is located on the right side of the navigation bar, which facilitates the user to operate from the right side. When the user clicks the first page display control 316, the customized system M will cache the social blog page into the memory, and the displayed position of the cached page will not change, for example, remaining at the display position corresponding to the current position of the slide bar 33. When the user clicks on the first page display control 316, the social blog page in the user interface 32 may gradually become transparent until it disappears, and then the chat page with the Wang Wu is displayed in the user interface 32. At the same time, the second page display control 321 of the social blog page will be displayed in the system operation bar 310. When the second page display control 321 is clicked, the customized system reads the cached social blog page from the memory and displays the social blog page again. The display position after the social blog page is displayed again is the same as the position displayed before the switching.

Accordingly, in the method for displaying a page provided by the embodiment of the present disclosure, a navigation bar and a user interface of the target application are displayed; at least one target conversation page of the target application is determined; a first page display control of the target conversation page is displayed in the navigation bar; and when a first designated operation performed on the first page display control is detected, the application page displayed in the user interface is switched to display a target conversation page corresponding to the first page display control. Since the user interface and the navigation bar of the target application are displayed side by side, and when an application page is displayed in the user interface, the first page display control of the target conversation page will be displayed in the navigation bar. When the first page display control is triggered, the user interface may display the target conversation page, so that the user can use the target conversation page to perform instant communication with a contact. It can be seen that the embodiment of the present disclosure can enable the user to directly switch from the application page to the target conversation page, save multi-step operations for the user to switch to the target conversation page, and improve the switching efficiency of the target conversation page.

In addition, when an application page is displayed in the user interface, a communication record of at least one contact is acquired from the target application. When the communication record satisfies the display condition, the conversation page of the contact corresponding to the communication record is determined as the target conversation page. It can enable the operating system to automatically determine a frequent contact, a most recent contact or a contact with an unread message according to the communication record, and determined the conversation page of such contact as the target conversation page. A corresponding first page display control is displayed in the navigation bar, which can improves the ability of the target application to automatically determine the contact for which the first displayed page is to be displayed, and can improve the intelligence degree of the display control of the navigation bar displaying the target session page.

In addition, after the first page display control is triggered by the first designated operation, the application page is cached; the second page display control of the application page is displayed in the navigation bar. When the second designation operation performed on the second page display control is detected, the target conversation page corresponding to the first page display control in the user interface is switched for displaying the application page. Therefore, when the target application displays a long article or other page, such as an editable page, it is possible to quickly switch back to the original position through the second page display control in the navigation bar, from the target conversation page switched before, and it is possible for the user to search a place already read in the long article or to edit the page again, thus improving the efficiency of the usage of the target application.

In addition, by displaying an integrated entry point in the navigation bar, when a third designated operation performed on the integrated entry point is detected, at least two first page display controls are displayed in the navigation bar, so that the navigation bar can always display the virtual button or control needed by the user, thus improving the space utilization efficiency of the navigation bar.

In addition, the navigation menu button is displayed in the navigation bar; when the fourth designated operation performed on the navigation menu button is detected, the first page display control is restored to display the predetermined virtual button, so that the virtual button of the terminal can be restored and displayed after use of the target control is finished, thus improving the usability of the basic functions of the navigation bar.

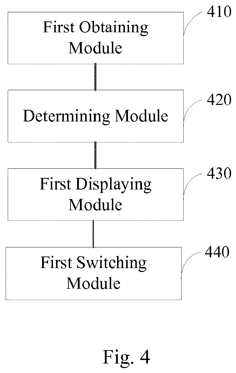

Based on the idea of the foregoing method embodiment, an embodiment of the present disclosure provides a block diagram of a device for displaying a page. The function of the device may be realized by pure hardware, or may be implemented by hardware to implement corresponding software, thereby implementing steps illustrated in Fig. 1 or Fig. 2. As shown in Fig. 4, the device for displaying a page may include a first obtaining module 410, a determining module 420, a first displaying module 430 and a first switching module 440.

The first obtaining module 410 is configured to display a navigation bar and a user interface of a target application, wherein the navigation bar is a control for displaying n virtual buttons provided by the operating system, where n is a positive integer.

The determining module 420 is configured to determine at least one target conversation page of the target application, wherein the at least one target conversation page is a conversation page not currently displayed in the user interface.

The first displaying module 430 is configured to display a first page display control of the at least one target conversation page in the navigation bar.

The first switching module 440 is configured to switch an application page displayed in the user interface to display a target conversation page corresponding to the first page display control, upon detecting a first designated operation performed on the first page display control.

Accordingly, in the device for displaying a page provided by the embodiment of the present disclosure, a navigation bar and a user interface of the target application are displayed; when an application page is displayed in the user interface, at least one target conversation page of the target application is determined; a first page display control of the at least one target conversation page is displayed in the navigation bar; and when a first designated operation performed on the first page display control is detected, the application page displayed in the user interface is switched to display a target conversation page corresponding to the first page display control. Since the user interface and the navigation bar of the target application are displayed side by side, and when an application page is displayed in the user interface, the first page display control of the target conversation page will be displayed in the navigation bar. When the first page display control is triggered, the user interface may display the target conversation page, so that the user can use the target conversation page to perform instant communication with a contact. It can be seen that the embodiment of the present disclosure can enable the user to directly switch from the application page to the target conversation page, save multi-step operations for the user to switch to the target conversation page, and improve the switching efficiency of the target conversation page.

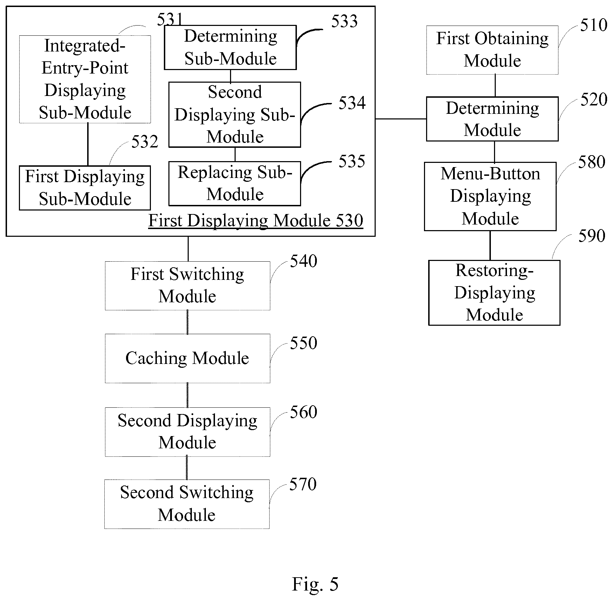

Referring to Fig. 5, an embodiment of the present disclosure provides a block diagram of a device for displaying a page. The function of the device may be realized by pure hardware, or may be implemented by hardware to implement corresponding software, thereby implementing steps illustrated in Fig. 1 or Fig. 2. As shown in Fig. 5, the device for displaying a page may include a first obtaining module 510, a determining module 520, a first displaying module 530 and a first switching module 540.

The first obtaining module 510 is configured to display a navigation bar and a user interface of a target application, wherein the navigation bar is a control for displaying n virtual buttons provided by the operating system, where n is a positive integer.

The determining module 520 is configured to determine at least one target conversation page of the target application, wherein the at least one target conversation page is a conversation page not currently displayed in the user interface.

The first displaying module 530 is configured to display a first page display control of the target conversation page in the navigation bar.

The first switching module 540 is configured to switch an application page displayed in the user interface to display a target conversation page corresponding to the first page display control, upon detecting a first designated operation performed on the first page display control.

Optionally, the determining module 520 includes an obtaining sub-module 521 and a determining sub-module 522.

The obtaining sub-module 521 is configured to obtain a communication record of at least one contact from the target application.

The determining sub-module 522 is configured to, when the communication record satisfies a display condition, determine the conversation page of the contact corresponding to the communication record as the target conversation page.

Optionally, the display condition includes at least one of:
a total number of communication messages being greater than a first number threshold, wherein the first number threshold is an integer not less than 0;
a total number of communication messages within a designated time period being greater than a second number threshold, wherein the second number threshold is an integer not less than 0; and
a second communication message being contained, wherein the second communication message is a communication message that has not been presented by the target application.

Optionally, the device further includes a caching module 550, a second displaying module 560 and a second switching module 570.

The caching module 550 is configured to, after the first page display control is triggered by the first designated operation, cache the application page.

The second displaying module 560 is configured to display a second page display control of the application page in the navigation bar.

The second switching module 570 is configured to switch the target conversation page corresponding to the first page display control in the user interface to display the application page, upon detecting a second designated operation performed on the second page display control.

Optionally, in the device, the at least one target conversation page is at least two target conversation pages, and the first displaying module 530 includes an integrated-entry-point displaying sub-module 531 and a first displaying sub-module 532.

The integrated-entry-point displaying sub-module 531 is configured to display an integrated entry point in the navigation bar, wherein the integrated entry point is for integrating at least two first page display controls respectively of the at least two target conversation pages.

The first displaying sub-module 532 is configured to display the at least two first page display controls in the navigation bar upon detecting a third designated operation performed on the integrated entry point, wherein each of the at least two display control respectively corresponds to one of the at least two target conversation page.

Optionally, the integrated-entry-point displaying sub-module 531 is configured to additionally display the display integrated entry point in an area outside the n virtual buttons in the navigation bar, wherein the n virtual buttons include at least one of a return button, a home button, and a menu button.

The first displaying sub-module 532 is configured to replace a predetermined virtual button among the n virtual buttons to display the first page display control according to the third designated operation.

Optionally, the device further includes a menu-button displaying module 580 and a restoring-displaying module 590.

The menu-button displaying module 580 is configured to display a navigation menu button in the navigation bar.

The restoring-displaying module 590 is configured to restore the first page display control to display the predetermined virtual button upon detecting a fourth designated operation performed on the navigation menu button.

Optionally, the first displaying module 530 includes a determining sub-module 533, a second displaying sub-module 534 and a replacing sub-module 535.

The determining sub-module 533 is configured to, when the display control includes M first page display controls, determine N third page display controls and (M-N) fourth page display controls among the M first page display controls where N is a preset positive integer, and M is an integer greater than N.

The second displaying sub-module 534 is configured to display the N third page display controls in the navigation bar.

The replacing sub-module 535 is configured to, upon detecting a fourth designated operation performed on the navigation bar, replace Z third page display controls in the N third page display controls to display Z fourth page display controls of the (M-N) fourth page display controls, where Z is a positive integer, and Z is not greater than the smaller of N and (M-N).

Accordingly, in the device for displaying a page provided by the embodiment of the present disclosure, a navigation bar and a user interface of the target application are displayed; at least one target conversation page of the target application is determined; a first page display control of the at least one target conversation page is displayed in the navigation bar; and when a first designated operation performed on the first page display control is detected, the application page displayed in the user interface is switched to display a target conversation page corresponding to the first page display control. Since the user interface and the navigation bar of the target application are displayed side by side, and when an application page is displayed in the user interface, the first page display control of the target conversation page will be displayed in the navigation bar. When the first page display control is triggered, the user interface may be switched to the target conversation page, so that the user can use the target conversation page to perform instant communication with a contact. It can be seen that the embodiment of the present disclosure can enable the user to directly switch from the application page to the target conversation page, save multi-step operations for the user to switch to the target conversation page, and improve the switching efficiency of the target conversation page.

In addition, when an application page is displayed in the user interface, a communication record of at least one contact is acquired from the target application. When the communication record satisfies the display condition, the conversation page of the contact corresponding to the communication record is determined as the target conversation page. It can enable the operating system to automatically determine a frequent contact, a most recent contact or a contact with an unread message according to the communication record, and determined the conversation page of such contact as the target conversation page. A corresponding first page display control is displayed in the navigation bar, which can improves the ability of the target application to automatically determine the contact for which the first displayed page is to be displayed, and can improve the intelligence degree of the display control of the navigation page displaying the target session page.

In addition, after the first page display control is triggered by the first designated operation, the application page is cached; the second page display control of the application page is displayed in the navigation bar. When the second designation operation performed on the second page display control is detected, the target conversation page corresponding to the first page display control in the user interface is switched for displaying the application page. Therefore, when the target application displays a long article or other page, such as an editable page, it is possible to quickly switch back to the original position through the second page display control in the navigation bar, from the target conversation page switched before, and it is possible for the user to search a place already read by the user in the long article or to edit the page again, thus improving the efficiency of the usage of the target application.

In addition, by displaying an integrated entry point in the navigation bar, when a third designated operation performed on the integrated entry point is detected, at least two first page display controls are displayed in the navigation bar, so that the navigation bar can always display the virtual button or control needed by the user, thus improving the space utilization efficiency of the navigation bar.

In addition, the navigation menu button is displayed in the navigation bar; when the fourth designated operation performed on the navigation menu button is detected, the first page display control is restored to display the predetermined virtual button, so that the virtual button of the terminal can be restored and displayed after use of the target control is finished, thus improving the usability of the basic functions of the navigation bar.

An exemplary embodiment of the present disclosure further provides a device for displaying a page, which can implement the method for displaying a page provided by the present disclosure. The device includes: a processor; and a memory for storing instructions executable by the processor; wherein the processor is configured to:
display a navigation bar and a user interface of a target application, wherein the navigation bar is a control for displaying n virtual buttons provided by an operating system, where n is a positive integer;
determine at least one target conversation page of the target application, wherein the at least one target conversation page is a conversation page not currently displayed in the user interface;
display a first page display control of the target conversation page in the at least one navigation bar; and
switch an application page displayed in the user interface to display a target conversation page corresponding to the first page display control, upon detecting a first designated operation performed on the first page display control.

Optionally, the determining at least one target conversation page of the target application includes:
obtaining a communication record of at least one contact from the target application; and
when the communication record satisfies a display condition, determining the conversation page of the contact corresponding to the communication record as the target conversation page.

Optionally, the display condition includes at least one of:
a total number of communication messages being greater than a first number threshold, wherein the first number threshold is an integer not less than 0;
a total number of communication messages within a designated time period being greater than a second number threshold, wherein the second number threshold is an integer not less than 0; and
a second communication message being contained, wherein the second communication message is a communication message that has not been presented by the target application.

Optionally, the method further includes:
after the first page display control is triggered by the first designated operation, caching the application page;
displaying a second page display control of the application page in the navigation bar; and
switching the target conversation page corresponding to the first page display control in the user interface to display the application page, upon detecting a second designated operation performed on the second page display control.

Optionally, the at least one target conversation page is at least two target conversation pages, and the displaying a first page display control of the target conversation page in the navigation bar includes:
displaying an integrated entry point in the navigation bar, wherein the integrated entry point is for integrating at least two first page display controls respectively of the at least two target conversation pages;
displaying the at least two first page display controls in the navigation bar upon detecting a third designated operation performed on the integrated entry point, wherein each of the at least two first page display control respectively corresponds to one of the at least two target conversation pages.

Optionally, the displaying an integrated entry point in the navigation bar includes:
additionally displaying the display integrated entry point in an area outside the n virtual buttons in the navigation bar, wherein the n virtual buttons include at least one of a return button, a home button, and a menu button; and
displaying the at least two first page display controls in the navigation bar upon detecting a third designated operation performed on the integrated entry point includes:
replacing a predetermined virtual button among the n virtual buttons to display the first page display control according to the third designated operation.

Optionally, the method further includes:
displaying a navigation menu button in the navigation bar; and
restoring the first page display control to display the predetermined virtual button upon detecting a fourth designated operation performed on the navigation menu button.

Optionally, displaying a first page display control of the target conversation page in the navigation bar includes:
when the display control includes M first page display controls, determining N third page display controls and (M-N) fourth page display controls among the M first page display controls where N is a preset positive integer, and M is an integer greater than N;
displaying the N third page display controls in the navigation bar;
upon detecting a fourth designated operation performed on the navigation bar, replacing Z third page display controls in the N third page display controls to display Z fourth page display controls of the (M-N) fourth page display controls, where Z is a positive integer, and Z is not greater than the smaller of N and (M-N).

It should be noted that, when the device provided by the above embodiment implements its functions, the division of the above-mentioned various functional modules is only for illustration. In practical applications, the above functions may be allocated to different functional modules according to actual needs. That is, the content structure of the device is divided into different functional modules to complete all or some of the functions described above.

With respect to the device in the above embodiments, the specific manners for performing operations of the respective modules have been described in detail in the embodiments related to the method, and detailed explanations will not be repeated herein.

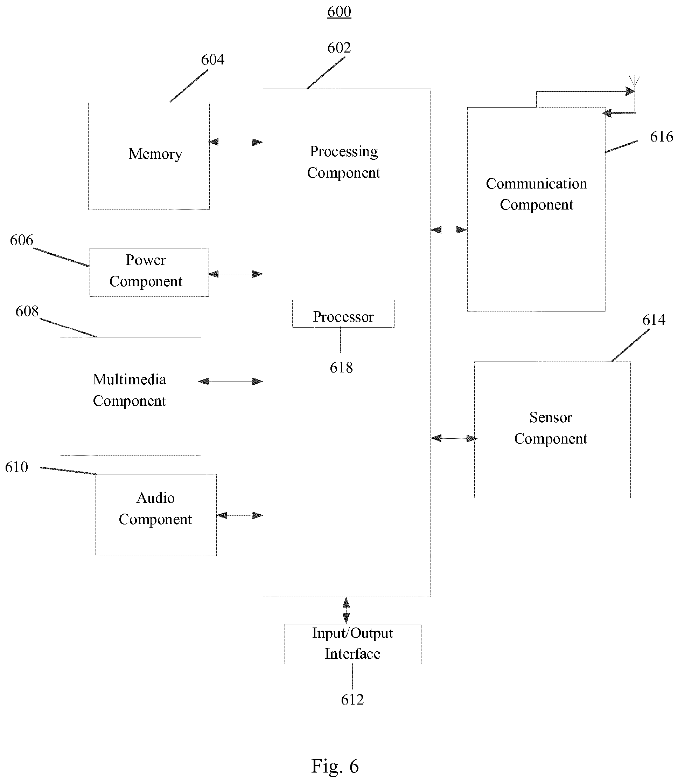

Fig. 6 is a block diagram illustrating a terminal according to an exemplary embodiment. For example, the terminal 600 may be a mobile phone, a mobile computer, a digital broadcast terminal, a messaging device, a tablet, or a personal digital assistant, and the like.

Referring to Fig. 6, the terminal 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the terminal 600, such as the operations associated with display, telephone calls, data communications, camera operations, and recording operations. The processing component 602 may include one or more processors 618 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the terminal 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the terminal 600. The power component 606 may include a power management system, one or more power sources, and any other components associated with the generation, management, and distribution of power in the terminal 600.

The multimedia component 608 includes a screen providing an output interface between the terminal 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the terminal 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the terminal 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the terminal 600. For instance, the sensor component 614 may detect an open/closed status of the terminal 600, relative positioning of components, e.g., the display and the keypad, of the terminal 600, a change in position of the terminal 600 or a component of the terminal 600, a presence or absence of user contact with the terminal 600, an orientation or an acceleration/deceleration of the terminal 600, and a change in temperature of the terminal 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the terminal 600 and other devices. The terminal 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for switching a display mode.

In an exemplary embodiment, there is also provided a computer readable storage medium, for example, the memory 604 including instructions. The instructions may be executed by the processor 618 of the terminal 600, for performing the steps of the method for displaying a page in the method embodiment shown in Fig. 1, Fig. 2, or Fig. 4. For example, the non-transitory computer-readable storage medium may be a ROM, a Random-Access Memory (RAM), a CD-ROM, a magnetic tape, a floppy disk, an optical data storage device, or the like.

A non-transitory computer-readable storage medium, when an instruction in the storage medium is executed by the processor of the terminal 600, enables the terminal 600 to perform the method for displaying a page shown in Fig. 1 or Fig. 2.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and embodiments be considered as exemplary only, with a true scope of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for displaying a page, comprising:
displaying (101) a navigation bar (310) and a user interface (31) of a target application, wherein the navigation bar (310) is a control for displaying n virtual buttons provided by an operating system, where n is a positive integer;
determining (102) at least one target conversation page of the target application, wherein the target conversation page is a conversation page not currently displayed in the user interface (31);
displaying (103) a first page display control (316) of the target conversation page in the navigation bar (310); and
switching (104) an application page displayed in the user interface to display a target conversation page corresponding to the first page display control (316), upon detecting a first designated operation performed on the first page display control (316), wherein the application page is at least one of a content presentation page or a data submission page that is different from the conversation page, and the method further comprises:
after the first page display control (316) is triggered by the first designated operation, caching (207) the application page;
displaying (208) a second page display control (321) of the application page in the navigation bar (310); and
switching (209) the target conversation page corresponding to the first page display control (316) in the user interface to display the application page, upon detecting a second designated operation performed on the second page display control (321).

2. The method according to claim 1, **characterized in that** the determining (101) at least one target conversation page of the target application comprises:
obtaining (202) a communication record of at least one contact from the target application; and
when the communication record satisfies a display condition, determining (203) the conversation page of the contact corresponding to the communication record as the target conversation page.

3. The method according to claim 2, **characterized in that** the display condition comprises at least one of:
a total number of communication messages being greater than a first number threshold, wherein the first number threshold is an integer not less than 0;
a total number of communication messages within a designated time period being greater than a second number threshold, wherein the second number threshold is an integer not less than 0; and
a second communication message being contained, wherein the second communication message is a communication message that has not been presented by the target application.

4. The method according to any one of claims 1 to 3, **characterized in that** the at least one target conversation page is at least two target conversation pages, and the displaying a first page display control of the target conversation page in the navigation bar comprises:
displaying (204) an integrated entry point (311) in the navigation bar (310), wherein the integrated entry point (311) is for integrating at least two first page display controls respectively of the at least two target conversation pages; and
displaying (210) the at least two first page display controls (316) in the navigation bar (310) upon detecting a third designated operation performed on the integrated entry point (311), wherein each of the at least two display controls respectively corresponds to one of the at least two target conversation pages.

5. The method according to claim 4, **characterized in that**:
the displaying (210) an integrated entry point in the navigation bar (310) comprises: additionally displaying the integrated entry point (311) in an area outside the n virtual buttons in the navigation bar (310), wherein the n virtual buttons include at least one of a return button (314), a home button (313), and a menu button (312); and
the displaying the at least two first page display controls (316) in the navigation bar (310) upon detecting a third designated operation performed on the integrated entry point (311) comprises: replacing a predetermined virtual button among the n virtual buttons to display the first page display control (316) according to the third designated operation.

6. The method according to claim 5, **characterized in** further comprising:
displaying a navigation menu button (318a, 318b) in the navigation bar (310); and
restoring the first page display control (316) to display the predetermined virtual button upon detecting a fourth designated operation performed on the navigation menu button (318a, 318b).

7. The method according to any one of claims 1 to 3, **characterized in that** the displaying a first page display control (316) of the target conversation page in the navigation bar (310) comprises:
when the display control includes M first page display controls (316), determining N third page display controls and (M-N) fourth page display controls among the M first page display controls (316) where N is a preset positive integer, and M is an integer greater than N;
displaying the N third page display controls in the navigation bar; and
upon detecting a fourth designated operation performed on the navigation bar (310), replacing Z third page display controls in the N third page display controls to display Z fourth page display controls of the (M-N) fourth page display controls, where Z is a positive integer, and Z is not greater than the smaller of N and (M-N).

8. A device (600) for displaying a page, comprising:
a processor (620); and
a memory (604) for storing instructions executable by the processor;
wherein the processor (620) is configured for:
displaying (101) a navigation bar (310) and a user interface (31) of a target application, wherein the navigation bar (310) is a control for displaying n virtual buttons provided by the operating system, where n is a positive integer;
determining (102) at least one target conversation page of the target application, wherein the at least one target conversation page is a conversation page not currently displayed in the user interface (31);
displaying (103) a first page display control (316) of the at least one target conversation page in the navigation bar (310); and
switching (104) an application page displayed in the user interface to display a target conversation page corresponding to the first page display control (316), upon detecting a first designated operation performed on the first page display control (316), wherein the application page is at least one of a content presentation page or a data submission page that is different from the conversation page, and the processor is further configured for
after the first page display control (316) is triggered by the first designated operation, caching (207) the application page;
displaying (208) a second page display control (321) of the application page in the navigation bar (310); and
switching (209) the target conversation page corresponding to the first page display control (316) in the user interface to display the application page, upon detecting a second designated operation performed on the second page display control (321).

9. The device according to claim 8, **characterized in that** the determining (102) at least one target conversation page of the target application comprises:
Obtaining (202) a communication record of at least one contact from the target application; and
when the communication record satisfies a display condition, determining (203) the conversation page of the contact corresponding to the communication record as the target conversation page.

10. The device according to claim 9, **characterized in that** the display condition comprises at least one of:
a total number of communication messages being greater than a first number threshold, wherein the first number threshold is an integer not less than 0;
a total number of communication messages within a designated time period being greater than a second number threshold, wherein the second number threshold is an integer not less than 0; and
a second communication message being contained, wherein the second communication message is a communication message that has not been presented by the target application.

11. The device according to any one of claims 8 to 10, **characterized in that** the at least one target conversation page is at least two target conversation pages, and the displaying a first page display control of the target conversation page in the navigation bar comprises:
displaying (204) an integrated entry point (311) in the navigation bar (310), wherein the integrated entry point (311) is for integrating at least two first page display controls respectively of the at least two target conversation pages; and
displaying (210) the at least two first page display controls (316) in the navigation bar (310) upon detecting a third designated operation performed on the integrated entry point (311), wherein each of the at least two display controls respectively corresponds to one of the at least two target conversation pages.

12. The device according to claim 11, **characterized in that**:
the displaying (210) an integrated entry point in the navigation bar (310) comprises: additionally displaying the integrated entry point (311) in an area outside the n virtual buttons in the navigation bar (310), wherein the n virtual buttons include at least one of a return button (314), a home button (313), and a menu button (312); and
the displaying the at least two first page display controls (316) in the navigation bar (310) upon detecting a third designated operation performed on the integrated entry point (311) comprises: replacing a predetermined virtual button among the n virtual buttons to display the first page display control (316) according to the third designated operation.

13. A computer readable storage medium, storing therein instructions that, when being loaded and executed by a processor (620), implement the method for displaying a page according to any one of claims 1 to 7.

## Patentansprüche

1. Verfahren zum Anzeigen einer Seite, das umfasst:
Anzeigen (101) einer Navigationsleiste (310) und einer Benutzeroberfläche (31) einer Zielanwendung, wobei die Navigationsleiste (310) eine Steuerung zum Anzeigen von n virtuellen Tasten ist, die von einem Betriebssystem bereitgestellt werden, wobei n eine positive ganze Zahl ist;
Bestimmen (102) mindestens einer Ziel-Konversationsseite der Zielanwendung, wobei die mindestens eine Ziel-Konversationsseite eine Konversationsseite ist, die aktuell nicht in der Benutzeroberfläche (31) angezeigt wird;
Anzeigen (103) einer ersten Seitenanzeigesteuerung (316) der Ziel-Konversationsseite in der Navigationsleiste (310); und
Umschalten (104) einer Anwendungsseite, die in der Benutzeroberfläche angezeigt wird, um eine Ziel-Konversationsseite anzuzeigen, die der ersten Seitenanzeigesteuerung (316) entspricht, beim Erfassen einer ersten designierten Betätigung, die auf der ersten Seitenanzeigesteuerung (316) ausgeführt wird, wobei die Anwendungsseite eine Inhaltsdarstellungsseite und/oder eine Datenübermittlungsseite ist, die sich von der Konversationsseite unterscheidet, und wobei das Verfahren ferner umfasst:
nachdem die erste Seitenanzeigesteuerung (316) durch die erste designierte Betätigung ausgelöst wird, Zwischenspeichern (207) der Anwendungsseite;
Anzeigen (208) einer zweiten Seitenanzeigesteuerung (321) der Anwendungsseite in der Navigationsleiste (310); und
Umschalten (209) der Ziel-Konversationsseite, die der ersten Seitenanzeigesteuerung (316) entspricht, in der Benutzeroberfläche, um die Anwendungsseite anzuzeigen, beim Erfassen einer zweiten designierten Betätigung, die auf der zweiten Seitenanzeigesteuerung (321) ausgeführt wird.

2. Verfahren nach Anspruch 1, **dadurch gekennzeichnet, dass** das Bestimmen (101) mindestens einer Ziel-Konversationsseite der Zielanwendung umfasst:
Erhalten (202) einer Kommunikationsaufzeichnung mindestens eines Kontakts der Zielanwendung; und
wenn die Kommunikationsaufzeichnung eine Anzeigebedingung erfüllt, Bestimmen (203) der Konversationsseite des Kontakts, welcher der Kommunikationsaufzeichnung entspricht, als Ziel-Konversationsseite.

3. Verfahren nach Anspruch 2, **dadurch gekennzeichnet, dass** die Anzeigebedingung mindestens eines aus Folgendem umfasst:
eine Gesamtzahl von Kommunikationsnachrichten, die größer als ein erster Anzahlschwellenwert ist, wobei der erste Anzahlschwellenwert eine ganze Zahl nicht kleiner als 0 ist;
eine Gesamtzahl von Kommunikationsnachrichten innerhalb eines bestimmten Zeitraums, die größer als ein zweiter Anzahlschwellenwert ist, wobei der zweite Anzahlschwellenwert eine ganze Zahl nicht kleiner als 0 ist; und
eine zweite enthaltene Kommunikationsnachricht, wobei die zweite Kommunikationsnachricht eine Kommunikationsnachricht ist, die nicht von der Zielanwendung dargestellt wurde.

4. Verfahren nach einem der Ansprüche 1 bis 3, **dadurch gekennzeichnet, dass** die mindestens eine Ziel-Konversationsseite mindestens zwei Ziel-Konversationsseiten ist, und das Anzeigen einer ersten Seitenanzeigesteuerung der Ziel-Konversationsseite in der Navigationsleiste umfasst:
Anzeigen (204) eines integrierten Eingabepunkts (311) in der Navigationsleiste (310), wobei der integrierte Eingabepunkt (311) dazu dient, jeweils mindestens zwei erste Seitenanzeigesteuerungen der mindestens zwei Ziel-Konversationsseiten zu integrieren; und
Anzeigen (210) der mindestens zwei ersten Seitenanzeigesteuerungen (316) in der Navigationsleiste (310) beim Erfassen einer dritten designierten Betätigung, die auf dem integrierten Eingabepunkt (311) ausgeführt wird, wobei jede der mindestens zwei Anzeigesteuerungen jeweils einer der mindestens zwei Ziel-Konversationsseiten entspricht.

5. Verfahren nach Anspruch 4, **dadurch gekennzeichnet, dass** das Anzeigen (210) eines integrierten Eingabepunkts in der Navigationsleiste (310) umfasst:
zusätzliches Anzeigen des integrierten Eingabepunkts (311) in einem Bereich außerhalb der n virtuellen Tasten in der Navigationsleiste (310), wobei die n virtuellen Tasten eine Return-Taste (314), eine Home-Taste (313) und/oder eine Menü-Taste (312) umfassen; und
das Anzeigen der mindestens zwei ersten Seitenanzeigesteuerungen (316) in der Navigationsleiste (310) beim Erfassen einer dritten designierten Betätigen, die auf dem integrierten Eingabepunkt (311) ausgeführt wird, umfasst: Ersetzen einer vorbestimmten virtuellen Taste unter den n virtuellen Tasten, um die erste Seitenanzeigesteuerung (316) gemäß der dritten designierten Betätigung anzuzeigen.

6. Verfahren nach Anspruch 5, **dadurch gekennzeichnet, dass** es ferner umfasst:
Anzeigen einer Navigationsmenü-Taste (318a, 318b) in der Navigationsleiste (310); und
Wiederherstellen der erste Seitenanzeigesteuerung (316), um die vorbestimmte virtuelle Taste anzuzeigen, beim Erfassen einer vierten designierten Betätigung, die auf der Navigationsmenü-Taste (318a, 318b) ausgeführt wird.

7. Verfahren nach einem der Ansprüche 1 bis 3, **dadurch gekennzeichnet, dass** das Anzeigen einer ersten Seitenanzeigesteuerung (316) der Ziel-Konversationsseite in der Navigationsleiste (310) umfasst:
wenn die Anzeigensteuerung M erste Seitenanzeigesteuerungen (316) aufweist, Bestimmen von N dritten Seitenanzeigesteuerungen und (M-N) vierten Seitenanzeigesteuerungen unter den M ersten Seitenanzeigesteuerungen (316), wobei N eine vorbestimmte positive ganze Zahl ist und M eine ganze Zahl größer als N ist;
Anzeigen der N dritten Seitenanzeigesteuerungen in der Navigationsleiste; und
beim Erfassen einer vierten designierten Betätigung, die auf der Navigationsleiste (310) ausgeführt wird, Ersetzen von Z dritten Seitenanzeigesteuerungen in den N dritten Seitenanzeigesteuerungen, um Z vierte Seitenanzeigesteuerungen der (M-N) vierten Seitenanzeigesteuerungen anzuzeigen, wobei Z eine positive ganze Zahl ist und Z nicht größer als der kleinere Wert von N und (M-N) ist.

8. Vorrichtung (600) zum Anzeigen einer Seite, die aufweist:
einen Prozessor (620); und
einen Speicher (604) zum Speichern von Instruktionen, die von dem Prozessor ausführbar sind;
wobei der Prozessor (620) für Folgendes ausgebildet ist:
Anzeigen (101) einer Navigationsleiste (310) und einer Benutzeroberfläche (31) einer Zielanwendung, wobei die Navigationsleiste (310) eine Steuerung zum Anzeigen von n virtuellen Tasten ist, die von dem Betriebssystem bereitgestellt werden, wobei n eine positive ganze Zahl ist;
Bestimmen (102) mindestens einer Ziel-Konversationsseite der Zielanwendung, wobei die mindestens eine Ziel-Konversationsseite eine Konversationsseite ist, die aktuell nicht in der Benutzeroberfläche (31) angezeigt wird;
Anzeigen (103) einer ersten Seitenanzeigesteuerung (316) der Ziel-Konversationsseite in der Navigationsleiste (310); und
Umschalten (104) einer Anwendungsseite, die in der Benutzeroberfläche angezeigt wird, um eine Ziel-Konversationsseite anzuzeigen, die der ersten Seitenanzeigesteuerung (316) entspricht, beim Erfassen einer ersten designierten Betätigung, die auf der ersten Seitenanzeigesteuerung (316) ausgeführt wird, wobei die Anwendungsseite eine Inhaltsdarstellungsseite und/oder eine Datenübermittlungsseite ist, die sich von der Konversationsseite unterscheidet, und wobei der Prozessor ferner für Folgendes ausgebildet ist:
nachdem die erste Seitenanzeigesteuerung (316) durch die erste designierte Betätigung ausgelöst wird, Zwischenspeichern (207) der Anwendungsseite;
Anzeigen (208) einer zweiten Seitenanzeigesteuerung (321) der Anwendungsseite in der Navigationsleiste (310); und
Umschalten (209) der Ziel-Konversationsseite, die der ersten Seitenanzeigesteuerung (316) entspricht, in der Benutzeroberfläche, um die Anwendungsseite anzuzeigen, beim Erfassen einer zweiten designierten Betätigung, die auf der zweiten Seitenanzeigesteuerung (321) ausgeführt wird.

9. Vorrichtung nach Anspruch 8, **dadurch gekennzeichnet, dass** das Bestimmen (102) mindestens einer Ziel-Konversationsseite der Zielanwendung umfasst:
Erhalten (202) einer Kommunikationsaufzeichnung mindestens eines Kontakts der Zielanwendung; und
wenn die Kommunikationsaufzeichnung eine Anzeigebedingung erfüllt, Bestimmen (203) der Konversationsseite des Kontakts, welcher der Kommunikationsaufzeichnung entspricht, als Ziel-Konversationsseite.

10. Vorrichtung nach Anspruch 9, **dadurch gekennzeichnet, dass** die Anzeigebedingung mindestens eines aus Folgendem umfasst:
eine Gesamtzahl von Kommunikationsnachrichten, die größer als ein erster Anzahlschwellenwert ist, wobei der erste Anzahlschwellenwert eine ganze Zahl nicht kleiner als 0 ist;
eine Gesamtzahl von Kommunikationsnachrichten innerhalb eines bestimmten Zeitraums, die größer als ein zweiter Anzahlschwellenwert ist, wobei der zweite Anzahlschwellenwert eine ganze Zahl nicht kleiner als 0 ist; und
eine zweite enthaltene Kommunikationsnachricht, wobei die zweite Kommunikationsnachricht eine Kommunikationsnachricht ist, die nicht von der Zielanwendung dargestellt wurde.

11. Vorrichtung nach einem der Ansprüche 8 bis 10, **dadurch gekennzeichnet, dass** die mindestens eine Ziel-Konversationsseite mindestens zwei Ziel-Konversationsseiten ist, und das Anzeigen einer ersten Seitenanzeigesteuerung der Ziel-Konversationsseite in der Navigationsleiste umfasst:
Anzeigen (204) eines integrierten Eingabepunkts (311) in der Navigationsleiste (310), wobei der integrierte Eingabepunkt (311) dazu dient, jeweils mindestens zwei erste Seitenanzeigesteuerungen der mindestens zwei Ziel-Konversationsseiten zu integrieren; und
Anzeigen (210) der mindestens zwei ersten Seitenanzeigesteuerungen (316) in der Navigationsleiste (310) beim Erfassen einer dritten designierten Betätigung, die auf dem integrierten Eingabepunkt (311) ausgeführt wird, wobei jede der mindestens zwei Anzeigesteuerungen jeweils einer der mindestens zwei Ziel-Konversationsseiten entspricht.

12. Vorrichtung nach Anspruch 11, **dadurch gekennzeichnet, dass** das Anzeigen (210) eines integrierten Eingabepunkts in der Navigationsleiste (310) umfasst:
zusätzliches Anzeigen des integrierten Eingabepunkts (311) in einem Bereich außerhalb der n virtuellen Tasten in der Navigationsleiste (310), wobei die n virtuellen Tasten eine Return-Taste (314), eine Home-Taste (313) und/oder eine Menü-Taste (312) umfassen; und
das Anzeigen der mindestens zwei ersten Seitenanzeigesteuerungen (316) in der Navigationsleiste (310) beim Erfassen einer dritten designierten Betätigen, die auf dem integrierten Eingabepunkt (311) ausgeführt wird, umfasst: Ersetzen einer vorbestimmten virtuellen Taste unter den n virtuellen Tasten, um die erste Seitenanzeigesteuerung (316) gemäß der dritten designierten Betätigung anzuzeigen.

13. Computerlesbares Speichermedium, auf dem Instruktionen gespeichert sind, die, wenn sie von einem Prozessor (620) geladen und ausgeführt werden, das Verfahren zum Anzeigen einer Seite nach einem der Ansprüche 1 bis 7 implementieren.

## Revendications

1. Procédé d'affichage d'une page, comprenant :
l'affichage (101) d'une barre de navigation (310) et d'une interface utilisateur (31) d'une application cible, dans lequel la barre de navigation (310) est une commande pour afficher n boutons virtuels fournis par un système d'exploitation, où n est un nombre entier positif ;
la détermination (102) d'au moins une page de conversation cible de l'application cible, dans lequel la page de conversation cible est une page de conversation qui n'est pas actuellement affichée dans l'interface utilisateur (31) ;
l'affichage (103) d'une première commande d'affichage de page (316) de la page de conversation cible dans la barre de navigation (310) ; et
la commutation (104) d'une page d'application affichée dans l'interface utilisateur pour afficher une page de conversation cible correspondant à la première commande d'affichage de page (316), lors de la détection d'une première opération désignée mise en oeuvre sur la première commande d'affichage de page (316), dans lequel la page d'application est au moins l'une parmi une page de présentation de contenu ou une page de communication de données qui est différente de la page de conversation, et le procédé comprend en outre :
après que la première commande d'affichage de page (316) est déclenchée par la première opération désignée, la mise en cache (207) de la page d'application ;
l'affichage (208) d'une seconde commande d'affichage de page (321) de la page d'application dans la barre de navigation (310) ; et
la commutation (209) de la page de conversation cible correspondant à la première commande d'affichage de page (316) dans l'interface utilisateur pour afficher la page d'application, lors de la détection d'une deuxième opération désignée mise en oeuvre sur la seconde commande d'affichage de page (321).

2. Procédé selon la revendication 1, **caractérisé en ce que** la détermination (101) d'au moins une page de conversation cible de l'application cible comprend :
l'obtention (202) d'un enregistrement de communication d'au moins un contact auprès de l'application cible ; et
lorsque l'enregistrement de communication respecte une condition d'affichage, la détermination (203) de la page de conversation du contact correspondant à l'enregistrement de communication en guise de page de conversation cible.

3. Procédé selon la revendication 2, **caractérisé en ce que** la condition d'affichage comprend au moins l'un parmi :
un nombre total de messages de communication étant supérieur à un premier seuil de nombre, dans lequel le premier seuil de nombre est un nombre entier qui n'est pas inférieur à 0 ;
un nombre total de messages de communication au cours d'une période de temps désignée étant supérieur à un second seuil de nombre, dans lequel le second seuil de nombre est un nombre entier qui n'est
pas inférieur à 0 ; et
un second message de communication étant contenu, dans lequel le second message de communication est un message de communication qui n'a pas été présenté par l'application cible.

4. Procédé selon l'une quelconque des revendications 1 à 3, **caractérisé en ce que** l'au moins une page de conversation cible est au moins deux pages de conversation cibles, et l'affichage d'une première commande d'affichage de page de la page de conversation cible dans la barre de navigation comprend :
l'affichage (204) d'un point d'entrée intégré (311) dans la barre de navigation (310), dans lequel le point d'entrée intégré (311) permet d'intégrer au moins deux premières commandes d'affichage de page respectivement des au moins deux pages de conversation cibles ; et
l'affichage (210) des au moins deux premières commandes d'affichage de page (316) dans la barre de navigation (310) lors de la détection d'une troisième opération désignée mise en oeuvre sur le point d'entrée intégré (311), dans lequel chacune des au moins deux commandes d'affichage correspond respectivement à une des au moins deux pages de conversation cibles.

5. Procédé selon la revendication 4, **caractérisé en ce que** :
l'affichage (210) d'un point d'entrée intégré dans la barre de navigation (310) comprend : l'affichage supplémentaire du point d'entrée intégré (311) dans une zone à l'extérieur des n boutons virtuels dans la barre de navigation (310), dans lequel les n boutons virtuels comportent au moins l'un parmi un bouton de retour (314), un bouton d'accueil (313), et un bouton de menu (312) ; et
l'affichage des au moins deux premières commandes d'affichage de page (316) dans la barre de navigation (310) lors de la détection d'une troisième opération désignée mise en oeuvre sur le point d'entrée intégré (311) comprend : le remplacement d'un bouton virtuel prédéterminé parmi les n boutons virtuels pour afficher la première commande d'affichage de page (316) selon la troisième opération désignée.

6. Procédé selon la revendication 5, **caractérisé en ce qu'**il comprend en outre :
l'affichage d'un bouton de menu de navigation (318a, 318b) dans la barre de navigation (310) ; et
la restauration de la première commande d'affichage de page (316) pour afficher le bouton virtuel prédéterminé lors de la détection d'une quatrième opération désignée mise en oeuvre sur le bouton de menu de navigation (318a, 318b).

7. Procédé selon l'une quelconque des revendications 1 à 3, **caractérisé en ce que** l'affichage d'une première commande d'affichage de page (316) de la page de conversation cible dans la barre de navigation (310) comprend :
lorsque la commande d'affichage comporte M premières commandes d'affichage de page (316), la détermination de N troisièmes commandes d'affichage de page et de (M-N) quatrièmes commandes d'affichage de page parmi les M premières commandes d'affichage de page (316) où N est un nombre entier positif prédéfini, et M est un nombre entier supérieur à N ;
l'affichage des N troisièmes commandes d'affichage de page dans la barre de navigation ; et
lors de la détection d'une quatrième opération désignée mise en oeuvre sur la barre de navigation (310), le remplacement de Z troisièmes commandes d'affichage de page dans les N troisièmes commandes d'affichage de page pour afficher Z quatrièmes commandes d'affichage de page des (M-N) quatrièmes commandes d'affichage de page, où Z est un nombre entier positif, et Z n'est pas supérieur au plus petit de N et de (M-N).

8. Dispositif (600) d'affichage d'une page, comprenant :
un processeur (620) ; et
une mémoire (604) pour stocker des instructions exécutables par le processeur ;
dans lequel le processeur (620) est configuré pour :
afficher (101) une barre de navigation (310) et une interface utilisateur (31) d'une application cible, dans lequel la barre de navigation (310) est une commande pour afficher n boutons virtuels fournis par le système d'exploitation, où n est un nombre entier positif ;
déterminer (102) au moins une page de conversation cible de l'application cible, dans lequel l'au moins une page de conversation cible est une page de conversation qui n'est pas actuellement affichée dans l'interface utilisateur (31) ;
afficher (103) une première commande d'affichage de page (316) de ladite au moins une page de conversation cible dans la barre de navigation (310) ; et
commuter (104) une page d'application affichée dans l'interface utilisateur pour afficher une page de conversation cible correspondant à la première commande d'affichage de page (316), lors de la détection d'une première opération désignée mise en oeuvre sur la première commande d'affichage de page (316), dans lequel la page d'application est au moins l'une parmi une page de présentation de contenu ou une page de communication de données qui est différente de la page de conversation, et le processeur est configuré en outre pour
après que la première commande d'affichage de page (316) est déclenchée par la première opération désignée, mettre en cache (207) de la page d'application ;
afficher (208) une seconde commande d'affichage de page (321) de la page d'application dans la barre de navigation (310) ; et
commuter (209) la page de conversation cible correspondant à la première commande d'affichage de page (316) dans l'interface utilisateur pour afficher la page d'application, lors de la détection d'une deuxième opération désignée mise en oeuvre sur la seconde commande d'affichage de page (321).

9. Dispositif selon la revendication 8, **caractérisé en ce que** la détermination (102) d'au moins une page de conversation cible de l'application cible comprend :
l'obtention (202) d'un enregistrement de communication d'au moins un contact auprès de l'application cible ; et
lorsque l'enregistrement de communication respecte une condition d'affichage, la détermination (203) de la page de conversation du contact correspondant à l'enregistrement de communication en guise de page de conversation cible.

10. Dispositif selon la revendication 9, **caractérisé en ce que** la condition d'affichage comprend au moins l'un parmi :
un nombre total de messages de communication étant supérieur à un premier seuil de nombre, dans lequel le premier seuil de nombre est un nombre entier qui n'est pas inférieur à 0 ;
un nombre total de messages de communication au cours d'une période de temps désignée étant supérieur à un second seuil de nombre, dans lequel le second seuil de nombre est un nombre entier qui n'est pas inférieur à 0 ; et
un second message de communication étant contenu, dans lequel le second message de communication est un message de communication qui n'a pas été présenté par l'application cible.

11. Dispositif selon l'une quelconque des revendications 8 à 10, **caractérisé en ce que** l'au moins une page de conversation cible est au moins deux pages de conversation cibles, et l'affichage d'une première commande d'affichage de page de la page de conversation cible dans la barre de navigation comprend :
l'affichage (204) d'un point d'entrée intégré (311) dans la barre de navigation (310), dans lequel le point d'entrée intégré (311) permet d'intégrer au moins deux premières commandes d'affichage de page respectivement des au moins deux pages de conversation cibles ; et
l'affichage (210) des au moins deux premières commandes d'affichage de page (316) dans la barre de navigation (310) lors de la détection d'une troisième opération désignée mise en oeuvre sur le point d'entrée intégré (311), dans lequel chacune des au moins deux commandes d'affichage correspond respectivement à une des au moins deux pages de conversation cibles.

12. Dispositif selon la revendication 11, **caractérisé en ce que** :
l'affichage (210) d'un point d'entrée intégré dans la barre de navigation (310) comprend : l'affichage supplémentaire du point d'entrée intégré (311) dans une zone à l'extérieur des n boutons virtuels dans la barre de navigation (310), dans lequel les n boutons virtuels comportent au moins l'un parmi un bouton de retour (314), un bouton d'accueil (313), et un bouton de menu (312) ; et
l'affichage des au moins deux premières commandes d'affichage de page (316) dans la barre de navigation (310) lors de la détection d'une troisième opération désignée mise en oeuvre sur le point d'entrée intégré (311) comprend : le remplacement d'un bouton virtuel prédéterminé parmi les n boutons virtuels pour afficher la première commande d'affichage de page (316) selon la troisième opération désignée.

13. Support de stockage lisible par ordinateur, stockant en son sein des instructions qui, lorsqu'elles sont chargées et exécutées par un processeur (620), mettent en oeuvre le procédé d'affichage d'une page selon l'une quelconque des revendications 1 à 7.
